# EUROPEAN PATENT APPLICATION

(11) **EP 3 511 151 A1**
(43) Date of publication of application: **17.07.2019**
(21) Application number: 18151411.8
(22) Date of filing: 12.01.2018
(51) Int. Cl.: B29C 64/153, B29C 64/393, B33Y 10/00, B33Y 30/00, B33Y 50/02

(54) **METHOD FOR OPERATING AT LEAST ONE APPARATUS FOR ADDITIVELY MANUFACTURING THREE-DIMENSIONAL OBJECTS**

(71) Applicant: CL Schutzrechtsverwaltungs GmbH, 96215 Lichtenfels (DE)
(72) Inventor: Pontiller-Schymura, Peter, 95512 Neudrossenfeld (DE); Schödel, Frank, 96317 Kronach (DE); Eichenberg, Boris, 96215 Lichtenfels (DE)
(74) Representative: Hafner & Kohl

(57) **Abstract**

Method for operating at least one apparatus (1) for additively manufacturing three-dimensional objects (2) by means of successive layerwise selective irradiation and consolidation of layers of a build material (3) which can be consolidated by means of an energy source, wherein slice data are provided relating to an application of build material (3) in at least one section of an object (2) to be built, wherein the slice data comprise at least one slice (14, 20 - 27, 31 - 35) relating to at least one corresponding layer of build material (3) to be applied, wherein a slice direction of at least one slice (14, 20 - 27, 31 - 35) at least partially extends in build direction (15).

## Description

The invention relates to a method for operating at least one apparatus for additively manufacturing of three-dimensional objects by means of successive layerwise selective irradiation and consolidation of layers of a build material which can be consolidated by means of an energy source, wherein slice data are provided relating to an application of build material in at least one section of an object to be built, wherein the slice data comprise at least one slice relating to at least one corresponding layer of build material to be applied.

Apparatuses for manufacturing of three-dimensional objects and methods for operating the same are generally known in prior art. Typically, said apparatuses are operated in that successively layers of build material are applied and consolidated, for example via an energy source, for example selectively irradiating applied layers of build material with an energy beam, for example a laser beam or an electron beam. The manufacturing of said three-dimensional objects is performed based on three-dimensional data that comprise inter alia the geometry of a three-dimensional object to be built.

Further, the three-dimensional data provided for manufacturing the three-dimensional object are transferred into so-called slice data that relate to the application of build material, in particular in a build plane in which the build material can directly be irradiated to selectively consolidate the build material. The slice data provide information relating to how the build material should be applied in the corresponding section, in particular a section of an object to be built. The slice data therefore, comprise a number of slices relating to the corresponding layers of build material to be applied. Said slices provide information relating to parameters of the application process, e.g. a layer thickness.

Usually, the number of slices is directly related to the height of the object to be built or a dimension of the object along the z-direction (build direction), wherein the object is sliced in that a uniform distribution of slices or an equidistant distribution of slices over the object to be built is performed. In other words, all slices usually have the same dimensions in build direction leading to a uniform layer thickness.

It is an object of the invention to provide a method for operating at least one apparatus for additively manufacturing of three-dimensional objects, wherein the slice data are improved.

The object is inventively achieved by an apparatus according to claim 1. Advantageous embodiments of the invention are subject to the dependent claims.

The method described herein is a method for operating an apparatus for additively manufacturing three-dimensional objects, e.g. technical components, by means of successive selective layerwise consolidation of layers of a powdered build material ("build material") which can be consolidated by means of an energy source, e.g. an energy beam, in particular a laser beam or an electron beam. A respective build material can be a metal, ceramic or polymer powder. A respective energy beam can be a laser beam or an electron beam. A respective apparatus can be a selective laser sintering apparatus, a selective laser melting apparatus or a selective electron beam melting apparatus, for instance. Alternatively, the successive layerwise selective consolidation of build material may be performed via at least one binding material. The binding material may be applied with a corresponding application unit and, for example, irradiated with a suitable energy source, e.g. a UV light source.

The apparatus may comprise a number of functional units which are used during its operation. Exemplary functional units are a process chamber, an irradiation device which is adapted to selectively irradiate a build material layer disposed in the process chamber with at least one energy beam, and a stream generating device, which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

As described before, slice data are provided that relate to the application of build material in at least one section of a three-dimensional object to be built. The inventive method allows for an object or object data that relate to the geometry, in particular three-dimensional data of an object to be additively built, to be sliced not only perpendicular to the build plane but to slice the object or object data, respectively, at least partially extending in build direction. Thus, the invention is based on the idea that a slice direction of at least one slice at least partially extends in build direction. Hence, slice data may be generated that comprise at least one slice with a slice direction at least partially extending in build direction (direction essentially perpendicular to the build plane).

The term "build direction" may refer to the direction in which build material is successively applied (and selectively consolidated). Typically, the build direction is upwards with respect to a build plate on which build material is applied or which carries build material, in particular the powder bed. The term build direction typically refers to a z-direction. The term "slice", for example, refers to a specific part of the slice data relating to the application of build material in at least one section of the object to be built. A slice typically relates to a corresponding layer of build material. For example, a slice refers to a layer of build material that has to be applied to form the object. The slice may therefore, define a parameter of the layer of build material to be applied, for example a layer thickness of build material. In other words, the slice defines how the corresponding layer of build material is applied. The term "slice direction" accordingly may refer to the direction in which the object or the object data are sliced or how the object or the object data are subdivided into slices and how the build material is applied. To generate the slice data the object or the object data, respectively, are "sliced" in a "slicing process", i.e. transferred into slice data. The slicing process can be understood or compared to cutting (or slicing) the object or the object data, respectively, into several slices (at least one slice). Thus, the slice direction defines how the "cuts" are made and extend through the object. The slice direction defines the orientation of the corresponding part of the slice relative to the object, for instance. Subsequently, build material can be applied as defined by the at least one slice, i.e. as defined by the slice data.

Typically, objects or object data are sliced parallel to the build plane (perpendicular to the build direction) generating slices that define uniform layers of build material to be successively applied and selectively irradiated to consolidate the build material. The invention suggests to have at least one slice, wherein the slice direction of the at least one slice at least partially extends in build direction. Thus, with the slice direction at least partially extending in build direction, the object or the object data are not sliced solely perpendicular to the build direction, but at least a part of the object or the object data are sliced in build direction.

Thus, dependent on a parameter of the object, for example a geometry of the object, it is possible to slice the object data at least partially extending in build direction. It is for example possible, to generate slice data, wherein a section of the object that has to be built continuously, can be sliced in one piece, wherein the application of build material that is defined via the slice data, can be performed continuously as well. For example, an object, such as a cylinder, can be sliced helically, wherein the slice direction of the at least one slice extends angular to the build direction and to the build plane, e.g. 20°. The slice direction may for example be constant or vary in build direction. Hence, it is possible to have at least one slice at least partially overlapping with itself in build direction. To provide the at least partially overlapping slice, the object or the object data may, for example, be sliced helically or spirally.

According to a first embodiment of the present invention, the slice direction defines an angle, in particular deviant from 0°, between an object surface, in particular an object bottom surface, and/or a build plane and the at least one slice. Hence, the slice direction defines an angle or the object or the object data are sliced under the angle, for example with respect to an object bottom surface or a build plane on which the build material is applied. Thus, it is possible to have an inclination of build material or the build material being applied with a slope on the build plane (with respect to the build direction). The application of build material under an angle on the build plane allows for new process possibilities, in particular regarding continuous manufacturing of three-dimensional objects. The angle the slice direction defines ranges between 0° and 90°, preferably between 1° and 20°, but the angle can be chosen arbitrarily, for example dependent on a geometry of the object to be manufactured. The angle defined by a slice direction may be constant or may vary along the build direction, for instance.

The at least one slice direction may define the angle, in particular deviant from 0°, between an object surface and/or a build plane and at least one slice and at least one preceding and/or a succeeding slice comprises a slice direction defining another angle, in particular essentially 0° between an object surface and/or a build plane and the at least one other slice. Of course the terms "slice" and "other slice" or the preceding and/or a succeeding slices may also refer to different portions of the same slice. Thus, it is possible to have one slice with different portions or sections, wherein the first slice portion is sliced in a first slice direction and at least one second slice portion of the same slice is sliced in another slice direction differing from the first slice direction.

It is also possible to have a first slice portion and a second slice portion, wherein the first slice portion and the second slice portion comprise essentially the same slice direction, wherein a third slice portion is arranged between the first slice portion and the second slice portion comprising different slice direction. Of course, an arbitrary combination of the embodiments described before is also possible. For example, an arbitrary combination or succession of slices or slice portions comprising different slice directions is feasible.

For example, at least one section of the object or object data may be sliced spirally, in particular helically or conically. The slice direction being helically or conically may be defined over the shell surface of the corresponding geometrical body, such as a cylinder or a cone. The slice direction therefore, extends along the shell surface of the corresponding geometrical body. It is further possible to have the step size adjusted constant or varying over the build direction, wherein the step size defines the distance in build direction after which the same slice overlaps with itself or the distance between two adjacent slices, in particular after 360° of slicing around a center axis (arranged in build direction) of the object.

At least one section of the object or the corresponding object data may be sliced continuously or in at least one step. The term "step" refers to a portion of a slice essentially extending in build direction, thus, having a slice direction of approximately 90°. For example the at least one section of the corresponding object or object data may be sliced in that at least two portions of the slice are connected via a step or two or more portions of the slice are connected continuously resulting in a continuous slicing of the object or the object data, respectively. A continuous slicing or slicing in at least one step allows for a continuous application of build material, wherein the build material may be applied according to the slice data, in particular by continuously applying build material on a build plane. For example, the build plate may continuously be lowered relative to the application unit allowing for fresh build material to be continuously applied on previously applied layers arranged in the build plane.

It is also possible to have build material applied on the build plane, wherein after a first application step is finished, the build plane is lowered in one step and subsequently fresh build material is applied. Of course, a combination of both application principles is feasible.

At least one portion of at least one slice, in particular the slice direction of the at least one slice, may be defined dependent on at least one irradiation parameter, in particular a layer thickness of build material defined by the at least one slice, which layer of build material is to be irradiated via a corresponding energy source, for example a laser or an electron beam. Thus, the object can be sliced taking into calculation how the build material applied in the build plane is subsequently irradiated via the energy source. A possible layer thickness may range between 10 µm and 500 µm, preferably between 20µm and 80 µm.

Various parameters that may be comprised in the at least one irradiation parameter may define how thick a layer of build material may be applied in the build plane. For example, dependent on the energy source that is used to consolidate the build material, different layer thicknesses may be used to achieve a proper consolidation of the build material. It is also possible to have different irradiation parameters for different sections of the object in that dependent on required properties of the object, for example mechanical properties of the object, different irradiation parameters may be used. Thus, it is also possible to consider the different irradiation parameters that may be used in the manufacturing process of the additively built object.

According to another embodiment of the inventive method, the slice data may comprise a number of first slices corresponding to a first section of the object and at least a number of second slices corresponding to at least a second section of the object, wherein the number of first slices and the number of second slices differ. In particular, the number of first slices per object height and/or per unit length and the number of second slices per object height and/or per unit length (e.g. per µm or mm) may differ. Thus, the embodiment allows for having different "slice sizes" leading to different layer thicknesses for at least two sections of the object. Advantageously, different sections of the object can be sliced finer to allow for example finer structures or geometrical details to be manufactured properly.

The inventive method may further improved in that at least two slices at least partially extend in build direction, wherein the at least two slices are nested, in particular concentrically nested helices. Thus, the object may be sliced into more than one slice, for example two slices, wherein of the at least two slices may at least partially extend in build direction. For example, the object may be sliced in multiple slices that are nested, i.e. arranged in that at least one slice is at least partially nested inside another slice. In particular, the object may be sliced in that each slice is assigned to one spiral or helix that is part of the object. Hence, the object may comprise multiple spirals or helices arranged nested, for example concentrically arranged with respect to a center of the object. Of course, the at least two slices may comprise a part of the object with different or the same direction of rotation with respect to a center or a rotational axis of the object
according to another preferred embodiment of the invention, the initial points of the at least two slices are arranged in different positions, in particular in circumferential direction, with respect to a center of the object, preferably arranged symmetrically. The term "center of the object" may refer to the object data describing the three-dimensional shape of the object to be additively manufactured. Thus, the initial points of the at least two slices, for example as described before, may origin from different points, for example from a bottom surface of the object, as described via the object data. Thus, it is possible to slice the object in that different slices start from different points of an arbitrary surface defined by the object data. It is particularly possible, that lines that connect the initial points with the center of the object define an angle. For example, it is possible to arrange the initial point of two slices in that they define an angle of 180° with respect to the center of the object and/or the respective of the initial point. Thus, the angle may be defined arbitrarily, wherein it is particularly preferred that the angle is defined by the number of slices that define, for example, spiral or helical structures that are part of the object to be manufactured. Thus, the angle between two lines connecting the center of the object with the initial point of the respective slice, may defined as 360°/n, wherein n is the number of slices and/or a initial points. Thus, the angle may be defined as 90° for four slices or 120° for three slices, for instance.

Besides, the invention relates to a method for generating slice data for at least one object to be manufactured with an apparatus for additively manufacturing three-dimensional objects by means of successive layerwise selective irradiation and consolidation of layers of a build material which can be consolidated by means of an energy source, wherein slice data are provided relating to an application of build material in at least one section of an object to be built, wherein the slice data comprise at least one slice relating to at least one corresponding layer of build material to be applied, wherein a slice direction of at least one slice at least partially extends in build direction.

Additionally, the invention relates to a slicing device for an apparatus for additively manufacturing three-dimensional objects by means of successive layerwise selective irradiation and consolidation of layers of a build material which can be consolidated by means of an energy source, which slicing device is adapted to generate slice data relating to an application of build material in at least one section of an object to be built, wherein the slice data comprise at least one slice relating to at least one corresponding layer of build material to be applied, wherein the slicing device is adapted to generate at least one slice, wherein a slice direction of the at least one slice at least partially extends in build direction.

Further, the invention relates to an apparatus for additively manufacturing three-dimensional objects by means of successive layerwise selective irradiation and consolidation of layers of a build material which can be consolidated by means of an energy source, wherein a slicing device is provided, in particular an inventive slicing device, as described before, that is adapted to generate slice data relating to an application of build material in at least one section of an object to be built, wherein the slice data comprise at least one slice relating to at least one corresponding layer of build material to be applied, wherein the slicing device is adapted to generate at least one slice, wherein a slice direction of the at least one slice at least partially extends in build direction.

Self-evidently, all features, details and advantages described with respect to the inventive method for operating an apparatus for additively manufacturing of three-dimensional objects are fully transferable to the inventive method for generating slice data. Preferably, the slice data generated via the inventive method for generating slice data are used for operating the apparatus according to the inventive method. For the generation of the slice data according to the inventive method for generating slice data, preferably an inventive slicing device may be used. Thus, the inventive method for operating a three-dimensional manufacturing apparatus, may be performed on the inventive apparatus for additively manufacturing of three-dimensional objects.

Exemplary embodiments of the invention are described with reference to the Fig. The Fig. are schematic diagrams, wherein
- Fig. 1: shows an inventive apparatus with an inventive slicing device;
- Fig. 2: shows slice data according to a first embodiment generated via the inventive slicing device of Fig. 1;
- Fig. 3: shows slice data of Fig. 2 in a perspective view;
- Fig. 4: shows slice data according to a second embodiment;
- Fig. 5: shows slice data according to a third embodiment;
- Fig. 6: shows slice data according to a fourth embodiment in top view; and
- Fig. 7: shows slice data according to a fifth embodiment in a perspective view.

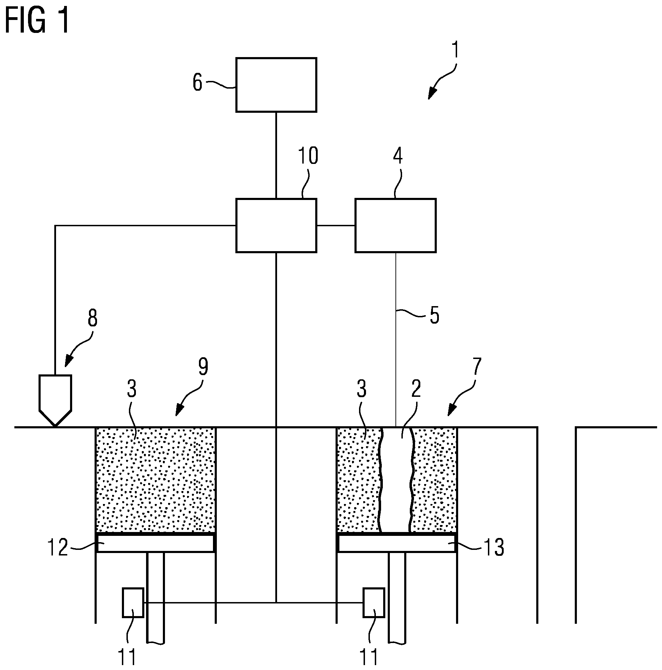

Fig. 1 shows an apparatus 1 for additively manufacturing of three-dimensional objects 2 by means of successive layerwise selective irradiation and consolidation of layers of a build material 3 which can be consolidated by means of an energy source, for example an irradiation device 4 adapted to generate a laser beam 5.

Fig. 1 further shows that a slicing device 6 is provided that is adapted to generate slice data relating to an application of the build material 3 in a build plane 7. The slice data thus, comprise multiple slices relating to corresponding layers of build material 3 to be successively applied to form the object 2. In particular, build material 3 is layerwise and successively applied by an application unit 8 from a dose plane 9 to the build plane 7. Each slice of the slice data is directly related to a layer of build material 3 to be applied in the build plane 7. The slicing device 6, for example a computer, therefore, generates the slice data comprising several slices that define how much build material 3 should be applied in the corresponding layer or the layer thickness of each corresponding layer is defined via the corresponding slice, respectively. Of course, build material 3 can be applied in any other arbitrary way, wherein the application of build material 3 provided in the dose plane 9 and conveyed via the application unit 8 onto a build plane 7 is to be understood as merely exemplary.

The apparatus 1 further comprises a control unit 10 that is adapted to control various components of the apparatus 1, such as the application unit 8, the irradiation device 4 or drive mechanisms 11 assigned to a dose plate 12 or a build plate 13. As can further be derived from Fig. 1, the dose plate 12 and the build plane 13 are adapted to carry the respective volume of build material 3 or the powder bed containing build material 3 and the additively built object 2 in case of the build plate 13. Accordingly, dependent on a position or a movement of the dose plate 12 corresponding to a respective drive of the driving mechanism 11, build material 3 can be provided in the dose plane 9 to be applied onto the build plane 7 via the application unit 8. Accordingly, the build plate 13 can be lowered to receive fresh build material 3 conveyed from the dose plane 9 via the application unit 8 to the build plane 7.

Thus, the control unit 10 is adapted to define and adjust a step size in which the corresponding dose plate 12 and build plate 13 are raised or lowered, respectively. The control unit 10 can preferably receive the slice data from the slicing device 6 that define the layer thickness of each layer that has to be applied on the build plane 7. Each slice defines how far the build plate 13 has to be lowered to receive fresh build material 3 forming a fresh layer of build material 3 in the build plane 7.

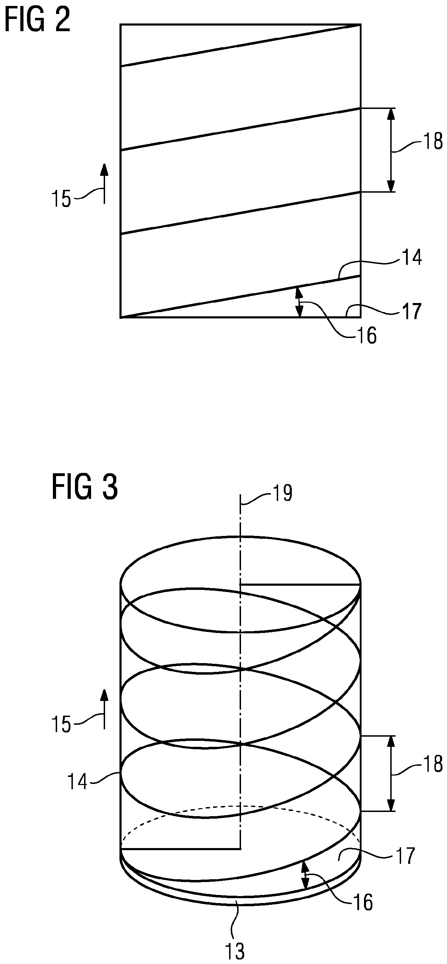

Fig. 2 shows slice data corresponding to object 2 according to a first embodiment. The slice data depicted in Fig. 2 shows that the object 2 is sliced into only one slice 14 that continuously extends through the object 2 partially in build direction and partially in circumferential direction of the object 2, for example. The build direction is indicated via an arrow 15.

A slicing direction defines an angle 16 between the at least one slice 14 and a surface of the object 2, e.g. the bottom surface 17 of the object 2. The angle 16 may take an arbitrary value between 0° and 90°, for example 15°, which may depend on the object 2 to be manufactured. As can be derived from Fig. 2, the slice 14 extends helically through the object 2 or the object data, respectively. The slice 14 thereby, defines how build material 3 is applied on the build plate 13. According to this example, a continuous application of build material 3 is feasible, as will be described with respect to Fig. 3 below.

Fig. 2 further shows that a step size is indicated via an arrow 18, wherein the step size in the embodiment in Fig. 2 is adjusted constant, wherein, of course, the step size can be adjusted in any arbitrary manner, for example (continuously) varying. By varying the step size, the distance between two turns of the slice 14 may be adjusted.

Fig. 3 shows the slice data from Fig. 2 in a perspective view, wherein it can be derived from Fig. 3, build material 3 has to be applied on the build plane 13 to allow for a continuous manufacturing process of a corresponding object 2. For example, to apply build material 3 on the build plate 13, the build plate 13 can rotate about a vertical axis 19, wherein build material 3 is continuously applied onto the build plate 13. By continuously rotating and lowering the build plate 13 fresh layers of build material 3 can be applied according to the slice 14, in particular the slice data depicted in Fig. 2, 3. Self-evidently, it is also possible to have the slice data generated in that multiple slices 14 are generated that continuously are arranged to (or stitched to) one another. In other words, the slice 14 depicted in Fig. 2, 3 could be split up into multiple slices 14. Preferably, each slice 14 overlaps after a 360° turn with itself.

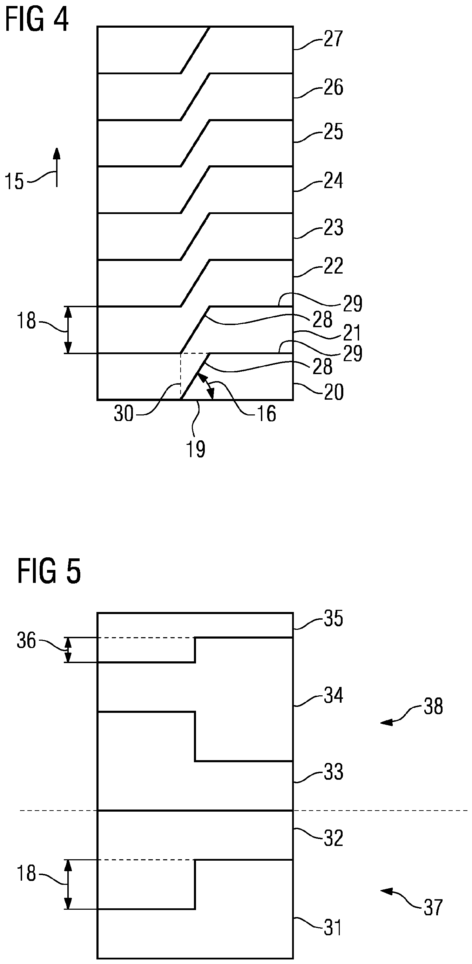

Fig. 4 shows slice data according to a second embodiment, wherein slices 20 - 27 are generated. As can be derived from Fig. 4, a continuous application of build material 3 can be performed in steps, wherein the step size is again indicated with arrow 18. Of course, the step size can be arbitrarily chosen and can vary over the single slices 20 - 27 or in build direction (indicated via arrow 15), respectively. Thus, each slice 20 - 27 comprises a first portion 28 that partially extends in build direction (arrow 15) and partially extends in circumferential direction of the object 2. Again, the angle 16 each portion 28 of each slice 20 - 27 encloses with a bottom surface 19 of the object 2 or the build plate 13, respectively, can be chosen arbitrarily. Thus, each slice 20 comprises a first portion 28 partially extending in build direction and a portion 29 essentially extending in circumferential direction. Thus, for example regarding the portion 28 of the slice 21, the portion 28 is enclosed between the portion 29 of slice 20 and the portion 29 of slice 22.

As further indicated in Fig. 4 via a dashed line 30, it is also possible to have the portion 28 extending perpendicular to the build plane 7 (bottom surface 19) in build direction. The application of build material 3 according to the slices 20 - 27 is performed essentially analogous to the application of build material 3 following the slice data as depicted in Fig. 2, 3. It is advantageous, to use a rotating build plate 13 on which build material 3 can be applied. The build plate 13 is thereby, not lowered continuously over a continuous slice 14, as depicted in Fig. 2, 3, but the build plate 13 is lowered as defined via the portions 28. In other words, the portion 28 defines how the build plate 13 is lowered against build direction, wherein after the portion 28 a circumferential portion 29 is attached, wherein the build plate 13 is rotated until the next portion 28 requires a lowering of the build plate 13 in a step according to the corresponding portion 28.

Fig. 5 shows slice data according to a third embodiment, wherein slices 31 - 35 are provided. As can be derived from Fig. 5, a step size 18 in slice 31 differs, for example, from a step size 36 in slice 34. Additionally, a number of slices in two sections of the object 2, for example a first section 37 and a second section 38 differs, as the first section 37 only comprises the slices 31 and 32, wherein the second section 38 comprises the slices 33, 34 and 35. In particular, a number of slices per unit length and/or per object height differs in the at least two sections 37, 38.

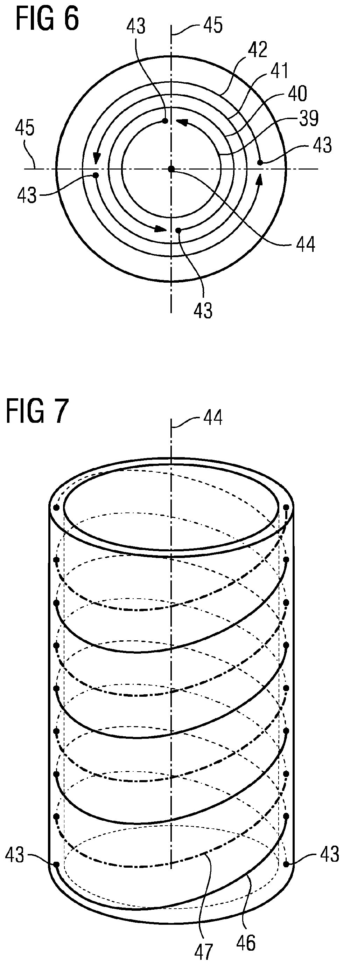

Fig. 6 shows slice data according to a fourth embodiment, wherein slices 39 - 42 are provided. As can be derived from Fig. 6, corresponding initial points 43 of the different slices 39 - 42 are arranged in different positions, for example with respect to a center 44 of the object 2. In detail, lines 45 that connect the initial points 43 with the center 44 enclose an angle of 90° between two neighboring initial points 43 (in circumferential direction around the center 44). For example, initial point 43 of the innermost slice 39 and the initial point 43 of the slice 41 enclose an angle of 90° between the corresponding lines 45. Thus, the total available angle of 360° around the circumference of the object 2 is equally divided into the number of slices, in particular four angles of 90° each.

As can further be derived from Fig. 6, the single slices 39 - 42 are nested, in particular concentrically arranged around the center 44 of the object 2. Of course, the direction of rotation, the slope and the number of turns each of the slices 39 - 42 comprises, can be chosen arbitrarily.

Fig. 7 shows slice data according to a fifth embodiment in a perspective view. In the embodiment that is depicted in Fig. 7, two slices 46, 47 are provided. The slices 46, 47 generally extend on the same diameter with respect to the center 44 of the object 2, as defined by the object data. In this exemplary embodiment both slices 46, 47 comprises the same number of turns and the same slope and the same direction of rotation. Of course, as described before with respect to Fig. 6, the initial points 43, the diameter on which the slices 46, 47 extend, the direction of rotation, the slope and various other parameters of the slices 46, 47 can be chosen arbitrarily. Further, as can be derived from the exemplary embodiment depicted in Fig. 7, the initial points 43 of the slice 46 and the slice 47 are arranged in opposite positions with respect to the center 44 of the object 2. Hence, an angle of 180° is enclosed between the initial points 43 of the slices 46, 47.

Of course, an arbitrary combination of the generation of slice data, as indicated in the Fig. 2 to 7 is feasible. The inventive method for generating slice data may be performed on the apparatus 1, for example using the slicing device 6. The inventive method for operating an apparatus for additively manufacturing three-dimensional objects may be performed on the apparatus 1.

## Claims

1. Method for operating at least one apparatus (1) for additively manufacturing three-dimensional objects (2) by means of successive layerwise selective irradiation and consolidation of layers of a build material (3) which can be consolidated by means of an energy source, wherein slice data are provided relating to an application of build material (3) in at least one section of an object (2) to be built, wherein the slice data comprise at least one slice (14, 20 - 27, 31 - 35) relating to at least one corresponding layer of build material (3) to be applied, **characterized in that** a slice direction of at least one slice (14, 20 - 27, 31 - 35) at least partially extends in build direction (15).

2. Method according to claim 1, **characterized in that** the slice direction defines an angle (16), in particular deviant from 0°, between an object surface, in particular an object bottom surface, and/or a build plane and the at least one slice (14, 20 - 27, 31 - 35).

3. Method according to claim 1 or 2, **characterized in that** the at least one slice direction defines an angle (16), in particular deviant from 0°, between an object surface and/or a build plane and at least one slice (14, 20 - 27, 31 - 35) or slice (14, 20 - 27, 31 - 35) portion (28, 29) and at least one preceding and/or succeeding slice (14, 20 - 27, 31 - 35) or slice (14, 20 - 27, 31 - 35) portion (28, 29) comprises a slice direction defining another angle (16), in particular essentially 0° between an object surface and/or a build plane and at least one preceding and/or succeeding slice (14, 20 - 27, 31 - 35) or slice (14, 20 - 27, 31 - 35) portion (28, 29).

4. Method according to one of the preceding claims, **characterized in that** the at least one section of the object (2) is sliced spirally, in particular helically or conically.

5. Method according to one of the preceding claims, **characterized in that** the at least one section is sliced continuously or in at least one step.

6. Method according to one of the preceding claims, **characterized in that** at least one portion (28, 29) of at least one slice (14, 20 - 27, 31 - 35) is defined dependent on at least one process parameter.

7. Method according to one of the preceding claims, **characterized in that** at least one portion (28, 29) of at least one slice (14, 20 - 27, 31 - 35), in particular the slice direction of the at least one slice (14, 20 - 27, 31 - 35), is defined dependent on at least one irradiation parameter, in particular a layer thickness of build material (3) defined by the at least one slice (14, 20 - 27, 31 - 35), which layer of build material (3) is to be irradiated via a corresponding energy source.

8. Method according to one of the preceding claims, **characterized in that** the slice data comprise a number of first slices (14, 20 - 27, 31 - 35) corresponding to a first section (37) of the object (2) and at least a number of second slices (14, 20 - 27, 31 - 35) corresponding to at least a second section (38) of the object (2), wherein the number of first slices (14, 20 - 27, 31 - 35) and the number of second slices (14, 20 - 27, 31 - 35) differ.

9. Method according to one of the preceding claims, **characterized in that** the number of first slices (14, 20 - 27, 31 - 35) per object height and/or per unit length and the number of second slices (14, 20 - 27, 31 - 35) per object height and/or per unit length differ.

10. Method for generating slice data for at least one object (2) to be manufactured with an apparatus (1) for additively manufacturing three-dimensional objects (2) by means of successive layerwise selective irradiation and consolidation of layers of a build material (3) which can be consolidated by means of an energy source, wherein slice data are provided relating to an application of build material (3) in at least one section of an object (2) to be built, wherein the slice data comprise at least one slice (14, 20 - 27, 31 - 35) relating to at least one corresponding layer of build material (3) to be applied, **characterized in that** a slice direction of at least one slice (14, 20 - 27, 31 - 35) at least partially extends in build direction.

11. Method according to one of the preceding claims, **characterized by** at least two slices (14, 20 - 27, 31 - 35) at least partially extending in build direction, wherein the at least two slices (14, 20 - 27, 31 - 35) are nested, in particular concentrically nested helices.

12. Method according to one of the preceding claims, **characterized in that** the initial points (43) of the at least two slices (14, 20 - 27, 31 - 35) are arranged in different positions, in particular in circumferential direction, with respect to a center (44) of the object (2), preferably arranged symmetrically.

13. Slicing device for an apparatus (1) for additively manufacturing three-dimensional objects (2) by means of successive layerwise selective irradiation and consolidation of layers of a build material (3) which can be consolidated by means of an energy source, which slicing device is adapted to generate slice data relating to an application of build material (3) in at least one section of an object (2) to be built, wherein the slice data comprise at least one slice (14, 20 - 27, 31 - 35) relating to at least one corresponding layer of build material (3) to be applied, **characterized in that** the slicing device is adapted to generate at least one slice (14, 20 - 27, 31 - 35) with a slice direction at least partially extending in build direction.

14. Slicing device according to claim 11, **characterized in that** the slicing device is adapted to perform the method according to one of the claims 1 to 8.

15. Apparatus (1) for additively manufacturing three-dimensional objects (2) by means of successive layerwise selective irradiation and consolidation of layers of a build material (3) which can be consolidated by means of an energy source, wherein a slicing device is provided, in particular a slicing device according to claim 11 or 12, that is adapted to generate slice data relating to an application of build material (3) in at least one section of an object (2) to be built, wherein the slice data comprise at least one slice (14, 20 - 27, 31 - 35) relating to at least one corresponding layer of build material (3) to be applied, **characterized in that** the slicing device is adapted to generate at least one slice (14, 20 - 27, 31 - 35) with a slice direction at least partially extending in build direction.
